# EUROPEAN PATENT SPECIFICATION

(11) **EP 3 383 172 B1**
(45) Date of publication and mention of the grant of the patent: **25.11.2026**
(21) Application number: 16871117.4
(22) Date of filing: 01.12.2016
(51) Int. Cl.: A01K 9/00

(54) **ANIMAL FEEDING TEATS**
TIERFÜTTERZITZEN
TRAYONS D'ALIMENTATION POUR ANIMAUX

(30) Priority: 01.12.2015 NZ 15714706
(43) Date of publication of application: 10.10.2018
(73) Proprietor: McInnes, Ross Gordon, Waipu 0582 (NZ)
(72) Inventor: McInnes, Ross Gordon, Waipu 0582 (NZ)
(74) Representative: Bridle Intellectual Property
(86) International application number: PCT/NZ2016/050190
(87) International publication number: WO 2017/095238

(56) References cited:
- DE-B3- 102011 105 853
- DE-U1- 202014 103 535
- GB-A- 191 117 750
- US-A- 1 207 052
- US-A- 2 516 730
- US-A- 2 522 757
- US-A- 2 535 159
- US-A- 5 598 809
- US-B1- 8 336 495

## Description

### FIELD OF THE INVENTION

This invention relates to animal feeding teats and to teat mounting systems, and in particular, but not exclusively to a young animal feeding teat and a system for mounting young animal feeding teats to young animal feeding equipment.

### BACKGROUND

Modern dairy farming practices in particular, often involves the feeding of large numbers of young animals, for example calves, lambs and goat kids, from an early age. The young animals are typically separated from their mothers in the first 24 hours from birth, and are initially trained to drink milk from an artificial teat. The teat is supplied with milk from a bottle, or via a tube from a bucket, or from a teat fitted to a feeder bowl, manifold, trough or tank.

It is helpful if the teat can prevent leakage of milk when a young animal is not drinking from the teat, for example when preparing a bowl or tank with milk and prior to the young animal drinking from the teat. But at the same time, the teats need to provide a controlled and adequate flow of milk to the young animal when the young animal suckles the teat.

It is helpful if the teat delivers the milk correctly into the mouth of the young animal so that it can sense the milk entering its mouth as naturally as possible, and to allow it to swallow the milk without choking. For these reasons teats are often designed with orifices having specific configurations, for example a vertical slit, or a cross shaped orifice. Such teats are designed so that as the young animal suckles, the squeezing action between the tongue and the roof of the mouth opens the orifice in the teat correctly and the milk is received into the mouth of the young animal at the desired rate and in the correct orientation.

And since the design of the teat and the orifice in the end of the teat is important, it is therefore important that a teat is oriented in a specific manner when it is used, or when it is fitted to a young animal feeding device. If a young animal feeding teat is not used or fitted correctly, the teat not will deliver the milk at the desired rate, or in the desired direction into the mouth of the young animal. Some teats will not even allow milk to flow if they are not within 15 to 20 degrees of their designed orientation.

In addition to this requirement, young animal feeding equipment must be regularly cleaned, preferably immediately after each use, since milk provides an ideal breeding ground for many pathogens.

This requirement to remove teats regularly for washing, and to orient them in a particular manner for correct use, provides an opportunity for mistakes to be made. For this reason, many teats are marked, for example with the wording "TOP" to indicate the side of the teat that should be uppermost. But many teats are fitted with screw threaded caps, and it can be time consuming to the align the teat just right within the screw cap so that the desired part of the teat is at the top when the teat is screwed onto the container tight enough to prevent leaks.

On farms where calving occurs within a specific season, the young animal feeding duties typically occur at the busiest time of the year. In such cases, the hassle of orienting teats correctly each time the calves are fed, or the equipment is cleaned, can be a significant burden at an already busy time.

On farms where calving is continuous through part or all of the year, it is increasingly common to start a new calf on a new teat fitted to a single teat feeder bowl or to a bottle, and to keep the calf in an individual pen for a number of days or weeks. When there are enough calves of similar age the calves are placed in a group. The teats that the calves have used in their individual pen are then removed from the single teat feeder bowl or bottle, and are placed in a multi teat feeder bowl for the group. As the teats are re-used, an easy attachment system is required. Also, keeping the orientation of the teat correct is essential when transferring it. A new teat is then fitted to the single teat feeder bowl or bottle for the next new calf. The same system can be used for infant goats or sheep.

Also, the manufacture of feeding troughs or bowls that have threaded attachment points can be difficult. That is because it is difficult to extract a threaded portion from an injection moulding tool for example. Other items such as bottles can be rotated to help remove them from a tool, but a large bowl, having a number of threaded bosses cannot be removed in this way. Complex tooling is therefore required, with parts of the tool that can be withdrawn after each manufacturing sequence, to allow the moulded item to be removed.

The following prior art documents were published prior to the priority date of the present application:
US 5,598,809 describes a teat that requires access to both the inside and the outside of a feeding trough to install. Installation involves forcing a flange of a base portion through a mounting hole. Cleaning a feeding trough having a number of these teats can be time consuming as each teat needs to be forced out of its mounting hole, cleaned, and then realigned and refitted, from the inside.

US 8,336,495 describes a teat that is screwed into a threaded collar. In addition to the relatively high manufacturing costs, it is not possible to accurately align a slit in the teat in any repeatable fashion.

DE 20 2014 103535 describes a teat with a circular sealing flange. The teat fits over a valve body that is situated inside a feeding bucket, and is held in place by a sliding retainer that is fitted on the outside of the bucket. Disassembly and reassembly is relatively complex in that four parts are involved, three of which require careful alignment and can be inadvertently misaligned, and access to the inside and the outside of the bucket is required at the same time. In addition, the connection of the teat to the bucket is not indexed in any way, allowing the teat to be fitted to the bucket without achieving any desired alignment of a slit in the teat relative to the bucket.

US 2,516,730 describes a teat which is fitted to a backing board. The teat can be aligned at any angle about its principle axis making the configuration described unsuitable for teats in which alignment is crucial. In addition, the arrangement does not lend itself to repeated disassembly for cleaning. The parts will soon become worn and begin to leak if repeatedly taken apart.

US 1,207,052 describes an older suckling device comprising two elongate members connected in a hinged arrangement. The configuration provides control over milk flow by requiring the two members to be squeezed together by a suckling action, which results in a crushed rubber tube being relaxed to allow milk to flow. As with the US 2,516,730 design, this configuration does not lend itself to repeated disassembly for cleaning.

GB 191117750 describes a feeding appliance for calves comprising a rubber teat having a flange. The teat is secured to a metal body portion by a sperate ring or annulus. The ring is passed over the teat and engages with the body portion using a bayonet-style action or by using pins engaging L-shaped slots, thereby clamping the teat against the body portion. Such arrangements require the handling and alignment of multiple separate components during assembly. In addition, engagement of a bayonet or pin-and-slot locking mechanism introduces additional structural and manufacturing complexity.

In this specification unless the contrary is expressly stated, where a document, act or item of knowledge is referred to or discussed, this reference or discussion is not an admission that the document, act or item of knowledge or any combination thereof was at the priority date, publicly available, known to the public, part of common general knowledge; or known to be relevant to an attempt to solve any problem with which this specification is concerned.

### OBJECT

It is therefore an object of the present invention to provide an animal feeding teat, which will at least go some way towards overcoming one or more of the above mentioned problems, or at least provide the public with a useful choice.

### STATEMENTS OF THE INVENTION

Accordingly, the invention provides an animal feeding teat as defined in the claims appended hereto. The female connection feature in the base end of the teat has no more than lines of symmetry.

Preferably at least one of the lines of symmetry of the connection feature in the base end is aligned with, or is perpendicular to, the opening or openings in the nipple end of the teat.

Preferably the complementary male feature on the milk receptacle is in the form of a spigot. Preferably the spigot is a rectangular spigot.

Preferably the spigot is a tapered spigot.

Preferably the teat is secured to the milk receptacle using a fastening system that includes the use of one or more snap fit retainers that are configured to secure the base of the teat to the milk receptacle.

Preferably the milk receptacle is a tank configured to supply multiple teats and having multiple complementary features configured to engage with each of the teats.

The animal feeding teat may be used with a teat mounting system, the teat mounting system having one or more retainer members configured to secure the teat to a receptacle that is configured to supply milk to the teat.

Preferably the or each retainer member is pivotally connected to the receptacle at a first end, and has a snap fit to the receptacle at a second end.

Optionally the or each retainer member is connected to the receptacle with a threaded connection.

The animal feeding teat may form part of an animal feeding apparatus having a milk receptacle and incorporating at least one animal feeding teat substantially as specified herein.

Preferably the milk receptacle includes a connection feature that is complementary to the connection feature of the animal feeding teat.

Preferably the animal feeding apparatus includes a receptacle in the form of a tank.

Preferably the tank is configured to receive multiple animal feeding teats.

The animal feeding teat may be used in an animal feeding apparatus incorporating a teat mounting system substantially as specified herein.

The animal feeding teat may be used in a method of fitting an animal feeding teat to an animal feeding apparatus, wherein the method includes the steps of;
- Aligning the teat such that a connection feature of the teat mates correctly with a complementary connection feature of a receptacle of the animal feeding apparatus,
- Securing the teat onto the receptacle using a fastening system.

Preferably the fastening system includes the use of one or more snap fit retainers that are configured to secure the base end of the teat to the receptacle.

Optionally the fastening system includes a threaded retainer which secures the base end of the teat to the receptacle.

### DESCRIPTION

Further aspects of the present invention will become apparent from the following description which is given by way of example only and with reference to the accompanying drawings in which:
- **FIGURE 1**: is a perspective view of an animal feeding teat according to the present invention, the teat viewed from a base end,
- **FIGURE 2**: is a perspective view of the animal feeding teat viewed from a nipple end,
- **FIGURE 3**: is an end elevation view of the animal feeding teat, viewed from the nipple end,
- **FIGURE 4**: is a plan view of the animal feeding teat,
- **FIGURE 5**: is an end elevation view of the animal feeding teat, viewed from the base end,
- **FIGURE 6**: is a perspective view showing a teat mounting system incorporating the animal feeding teat,
- **FIGURE 7**: is a perspective view of a section of the side of a receptacle for holding milk, the receptacle being configured to mate with the animal feeding teat, and
- **FIGURE 8**: is a perspective view showing a clip of the teat mounting system, and
- **FIGURE 9**: is a perspective view of an adapter for use with animal feeding teats which does not form a part of the claimed invention.

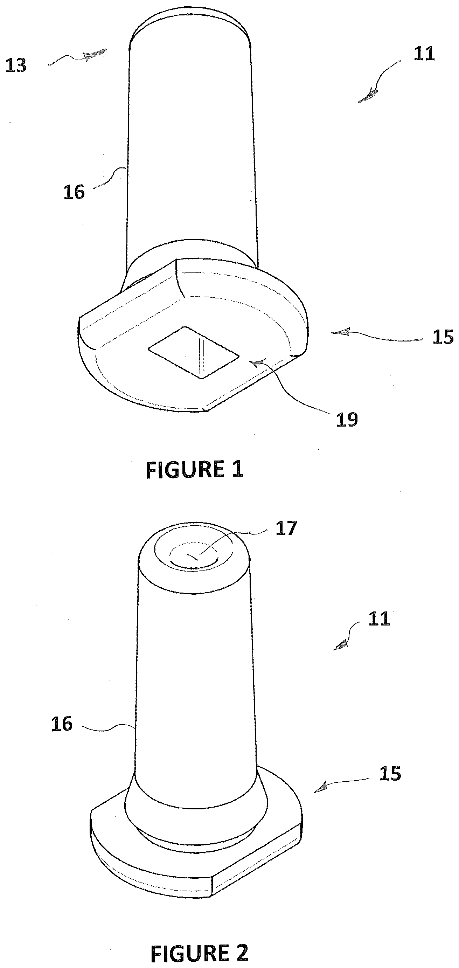

With reference to **Figures 1** to **5****,** an animal feeding teat (11) according to the present invention will now be described. The animal feeding teat (11) has a particular connection feature and is configured to mate with a receptacle, for example an animal feeding bowl, manifold, tank or trough, that has a complementary mounting feature. The connection feature is designed to ensure that the animal feeding teat (11) is always fitted to the receptacle in a specific orientation.

The ability to ensure that the animal feeding teat (11) is always fitted to the receptacle in a particular orientation is helpful in that it ensures that the teat can always be oriented exactly as intended by its designers for the best possible performance as an animal feeding teat.

As with most other teats on the market, the animal feeding teat (11) has a nipple end (13) and a base end (15). The nipple end (13) and the base end (15) are each formed at opposite ends of a body section (16). In this example, the nipple end (13) has a single opening, in the form of a slit (17). The slit (17) is best aligned vertically when in use. The teat (11) is configured to discharge milk in a desired manner into the mouth of a young animal only when the slit (17) is aligned vertically in relation to the young animal suckling on the teat (11).

The base end (15) is configured to engage with a receptacle, for example a bowl or manifold that is used to hold milk and to supply the milk to the teat. The base end (15) includes a connection feature (19) which in this example is in the form of a rectangular shaped recess that extends into the base end (15) of the teat. The connection feature (19) communicates with a hollow interior of the body section (16). When in use, milk flows through the connection feature (19), and through the hollow interior of the body section (16), and to the slit (17).

The connection feature (19) is configured to engage with a complementary feature on a receptacle, for example a rectangular spigot on a young animal feeding bowl or manifold. An important aspect of the connection feature (19) is that it has no more than two lines of symmetry and in this example, two lines of symmetry. The lines of symmetry are lines of symmetry when considering the shape of the connection feature (19) within a plane of the base end (15), or a 'base end plane'. The base end plane is a plane that is perpendicular to the direction of the supply of milk from the receptacle into the base end (15) of the teat (11).

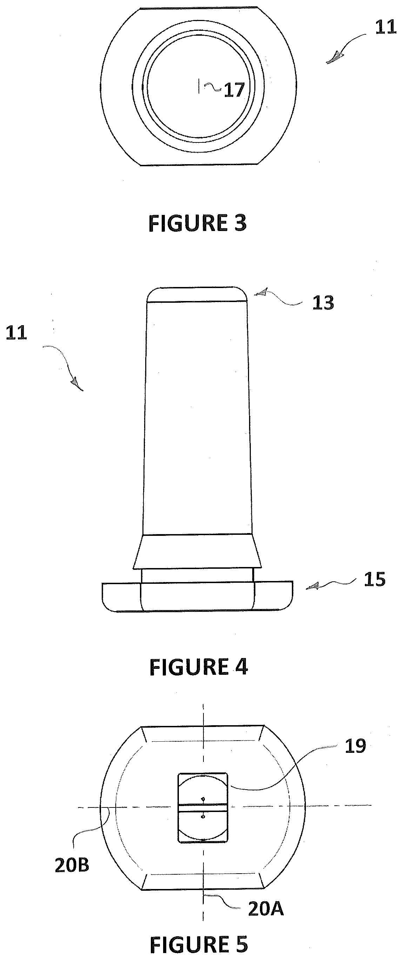

As mentioned above, the connection feature (19) in the base end (15) of the teat (11) has two lines of symmetry. The connection feature (19) has a cross sectional shape which is substantially rectangular, and the two lines of symmetry are the two axes of the substantially rectangular shape. The two lines of symmetry are shown in **Figure 5****,** a first line of symmetry (20A) which is aligned with, or is parallel to, the length of the slit (19), and a second line of symmetry (20B) which is perpendicular the first line of symmetry (20A).

The connection feature (19) in the base is a female feature which is configured to mate with a complementary male feature on the receptacle adapted to supply milk to the teat. The connection feature in the base end (15) of the teat is configured to mate with the complementary feature on the receptacle in such a manner that a seal is formed between the connection feature in the base of the teat and the complementary feature on the receptacle.

The lines of symmetry of the connection feature in the base are either aligned with, or are perpendicular to, the slit (17) in the nipple end (13) of the teat (11).

The teats (11) are commonly used on individual feeding bottles, and multiple teats (11) are commonly used on receptacles such as bowls, manifolds, troughs or tanks which are configured to feed a number of animals at one time. In such cases, the receptacles have multiple complementary features configured to engage with the teats (11).

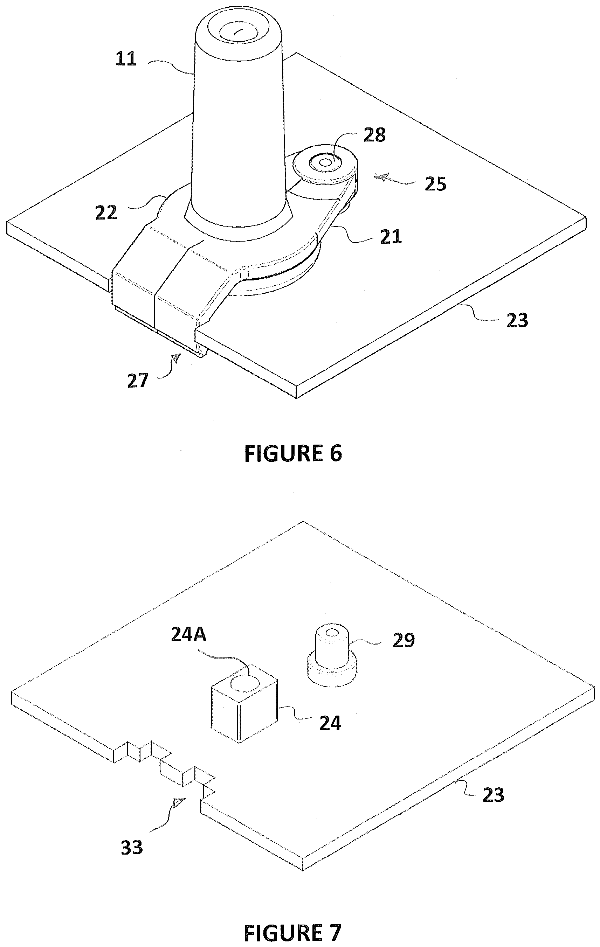

With reference to **Figures 6** to **8****,** a teat mounting system for use with the teat (11) will now be described. The teat mounting system has a first retainer member (21) and a second retainer member (22). The first retainer member (21) and the second retainer member (22) are configured to secure the teat (11) to a receptacle (23) that is configured to supply milk to the teat (11).

Note: in figures 6 and 7, only a small section of the sidewall of a receptacle (23) is shown. The receptacle (23) will typically be a feeding bowl which supplies perhaps 10 to 30 teats.

The connection feature (19) of the teat (11) is configured to mate with a spigot (24) on the receptacle (23). The spigot (24) will typically have an internal passageway or bore (24A) through which milk passes from the receptacle (23) to the back of the teat (11).

It can be seen in figure 7 that in this example, the spigot (24) has a rectangular cross section similar to that of the connection feature (19) of the teat (11). The spigot (24) can be tapered to help provide an improved sealing fit between the teat (11) and the receptacle (23) when the teat (11) is fitted. Similarly, the sides of the substantially rectangular spigot (24) can be slightly convex, or curved outwardly a little to assist in achieving a leak resistant seal between the spigot (24) and the connection feature (19) of the teat (11). In addition, the sides of the substantially rectangular recess of the connection feature (19) can be slightly concave to match the convex sides of the spigot (24) to help with the leak resistance.

The retainer members (21) and (22) are pivotally connected to the receptacle (23) at a first end (25). The pivotal connecting of each of the retainer members (21) and (22) is provided by a screw (28) which is inserted into a boss (29) on the side of the receptacle (23). The retainer member (21) has a pair of protrusions (30) that are configured to mate with complimentary sockets (not shown) in the (22) retainer member (21). The protrusions (30) can be configured to have an interference fit with the complimentary sockets, or have an enlarged head that is configured to mate with the complimentary sockets with a snap-fit, so that the retainer members (21) and (22) are held firmly together.

The retainer members (21) and (22) also have a snap fit connection to the receptacle (23) at a second end (27). The snap fit is produced by a tooth (30) on each of the retainer members (21) and (22) that is configured to snap over an edge (33) of the receptacle (23) and to engage with the edge (33).

The teat (11) provides a method of fitting an animal feeding teat to an animal feeding apparatus, wherein the method includes the steps of;
- Aligning the teat such that a connection feature of the teat mates correctly with a complementary connection feature of a receptacle of the animal feeding apparatus,
- Securing the teat onto the receptacle using a fastening system.

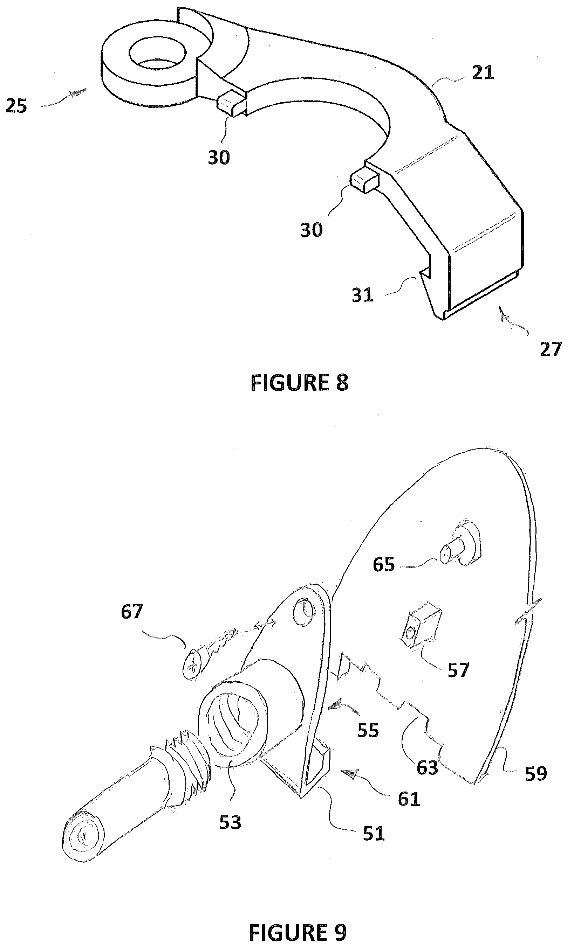

With reference to **Figure 9****,** which does not fall within the scope of claim 1, and is therefore not a part of the invention. a teat adapter (51) will now be described. The teat adapter (51) is a device that allows a range of existing teats to be used on a receptacle that is configured for use with the teats (11). The teat adapter (51) has a teat receiving portion (53), and a connector portion (55). The teat receiving portion (53) is configured to mate with existing teats in the usual manner.

The connector portion (55) has a female receiving portion (not shown), and is configured to mate with a spigot (57) on a milk storage receptacle (59). The connection between the female receiving portion and the spigot (57) is designed to be a leak resistant joint, for example by providing a shallow taper on the spigot (57) and pressing the female receiving portion onto the spigot (57).

The teat adapter (51) is also configured such that it can be secured to the receptacle. In this example the teat adapter (51) has a hooked end (61) that is able to grip a lower edge (63) of the receptacle (59), and it has a fastener hole (65) at an opposite end, allowing a screw (67) to be used to secure the teat adapter (51) onto the receptacle (59).

### VARIATIONS

The disclosures and the description herein are purely illustrative and are not intended to be in any sense limiting.

In the example described above, the connection feature (19) of the teat (11) has a rectangular shape. As noted this shape importantly has no more than two lines of symmetry. However, it is envisaged that a number of other shapes that also have no more than two lines of symmetry could be used, for example an elliptical shape could be used.

The example of a retention method described above includes two retention members. It is envisaged that a single retention member could be used, or a greater number if desired. Also, as an alternative to the retainers that are fixed using multiple fastening locations, a threaded collar or similar fitting could be used, that is a threaded collar that engages with a complementary thread on the receptacle.

### DEFINITIONS

Throughout this specification the word "comprise" and variations of that word, such as "comprises" and "comprising", are not intended to exclude other additives, components, integers or steps.

### ADVANTAGES

Thus, it can be seen that the invention provides an animal feeding teat which can be fitted quickly and with very little chance of misalignment.

Also, the use of a teat, or a teat adapter, allows simplified manufacture of receptacles for holding milk in animal feeding apparatus.

## Claims

1. An animal feeding teat (11), the teat having a nipple end (13) and a base end (15), the nipple end having one or more openings (17) configured to discharge milk into the mouth of an animal, and the base end being configured to engage with a milk receptacle adapted to supply milk to the teat, and the base end includes a connection feature (19) that is configured to engage with a complementary feature (24) on the milk receptacle; and the shape of the connection feature, when considered in a base end plane, has no more than two lines of symmetry (20), the base end plane being perpendicular to the direction of the supply of milk from the milk receptacle into the base end of the teat; and the animal feeding teat is **characterised in that** the connection feature in the base end of the teat is a female connection feature and which is configured to mate with a complementary male feature (24) on the milk receptacle, and the connection feature in the base end of the teat is configured to mate with the complementary feature on the milk receptacle in such a manner that a seal is formed between the connection feature in the base end of the teat and the complementary feature on the milk receptacle wherein the female connection feature in the base end of the teat:
i. is a rectangular shaped recess; or
ii. has a substantially rectangular shape in the base end plane; or
iii. has a substantially elliptical shape in the base end plane.

2. An animal feeding teat as claimed in claim 1, wherein the female connection feature in the base end of the teat has two lines of symmetry.

3. An animal feeding teat as claimed in claim 1 or claim 2, wherein at least one of the lines of symmetry of the connection feature in the base end is aligned with, or is perpendicular to, the opening or openings in the nipple end of the teat.

4. An animal feeding teat as claimed in any one of claims 1 to 3, wherein the complementary male feature on the milk receptacle is in the form of a spigot (24).

5. An animal feeding teat as claimed in 4, wherein the spigot is a rectangular spigot.

6. An animal feeding teat as claimed in claim 4 or claim 5, wherein the spigot is a tapered spigot.

7. An animal feeding teat as claimed in any one of claims 1 to 6, wherein the teat is configured to be secured to the milk receptacle using a fastening system that includes the use of one or more snap fit retainers (21 and 22) that are configured to secure the base of the teat to the milk receptacle.

## Patentansprüche

1. Tierfütterungssauger (11), wobei der Sauger ein Saugende (13) und ein Basisende (15) aufweist, wobei das Saugende eine oder mehrere Öffnungen (17) aufweist, die konfiguriert sind, um Milch in das Maul eines Tieres abzugeben, und wobei das Basisende konfiguriert ist, um mit einem Milchbehälter zusammenzuwirken, der angepasst ist, um Milch dem Sauger zuzuführen, und wobei das Basisende ein Verbindungselement (19) enthält, das konfiguriert ist, um mit einem ergänzenden Element (24) am Milchbehälter zusammenzuwirken; und wobei die Form des Verbindungselements, in einer Ebene des Basisendes betrachtet, nicht mehr als zwei Symmetrielinien (20) aufweist, wobei die Ebene des Basisendes rechtwinklig zur Zufuhrrichtung der Milch vom Milchbehälter in das Basisende des Saugers ist; und wobei der Tierfütterungssauger **dadurch gekennzeichnet ist, dass** das Verbindungselement am Basisende des Saugers ein weibliches Verbindungselement ist, das konfiguriert ist, um sich mit einem ergänzenden männlichen Verbindungselement (24) am Milchbehälter zu verbinden, und das Verbindungselement am Basisende des Saugers konfiguriert ist, um sich mit dem ergänzenden Verbindungselement am Milchbehälter auf eine solche Weise zu verbinden, dass eine Dichtung zwischen dem Verbindungselement am Basisende des Saugers und dem ergänzenden Verbindungselement am Milchbehälter gebildet wird, wobei das weibliche Verbindungselement am Basisende des Saugers:
i. eine rechtwinklig geformte Aussparung ist; oder
ii. eine im Wesentlichen rechtwinklige Form in der Ebene des Basisendes aufweist; oder
iii. eine im Wesentlichen elliptische Form in der Ebene des Basisendes aufweist.

2. Tierfütterungssauger nach Anspruch 1, wobei das weibliche Verbindungselement am Basisende des Saugers zwei Symmetrielinien aufweist.

3. Tierfütterungssauger nach Anspruch 1 oder Anspruch 2, wobei mindestens eine der Symmetrielinien des Verbindungselements am Basisende auf die Öffnung bzw. die Öffnungen am Saugende des Saugers ausgerichtet oder rechtwinklig zu diesen ist.

4. Tierfütterungssauger nach einem der Ansprüche 1 bis 3, wobei das ergänzende männliche Element am Milchbehälter die Form eines Stutzens (24) aufweist.

5. Tierfütterungssauger nach Anspruch 4, wobei der Stutzen ein rechtwinkliger Stutzen ist.

6. Tierfütterungssauger nach Anspruch 4 oder 5, wobei der Stutzen ein spitz zulaufender Stutzen ist.

7. Tierfütterungssauger nach einem der Ansprüche 1 bis 6, wobei der Sauger konfiguriert ist, um mit einem Befestigungssystem am Milchbehälter befestigt zu werden, das die Verwendung eines oder mehrerer Rasthalteelemente (21 und 22) beinhaltet, die konfiguriert sind, um die Basis des Saugers am Milchbehälter zu befestigen.

## Revendications

1. Tétine d'alimentation animale (11), la tétine comportant une extrémité de mamelon (13) et une extrémité de base (15), l'extrémité de mamelon comportant une ou plusieurs ouvertures (17) configurées pour décharger du lait dans la bouche d'un animal, et l'extrémité de base étant configurée pour s'engager avec un réceptacle à lait adapté pour alimenter la tétine en lait, dans laquelle l'extrémité de base inclut un élément de connexion (19) configuré pour s'engager avec un élément complémentaire (24) sur le réceptacle à lait ; et la forme de l'élément de connexion, quand elle est considérée dans un plan d'extrémité de base, ne présente pas plus de deux lignes de symétrie (20), le plan d'extrémité de base étant perpendiculaire à la direction de l'alimentation en lait depuis le réceptacle à lait dans l'extrémité de base de la tétine ; et la tétine d'alimentation animale est **caractérisée en ce que** l'élément de connexion dans l'extrémité de base de la tétine est un élément de connexion femelle et est configuré pour s'accoupler avec un élément mâle complémentaire (24) sur le réceptacle à lait, et l'élément de connexion dans l'extrémité de base de la tétine est configuré pour s'accoupler avec l'élément complémentaire sur le réceptacle à lait de telle manière qu'une étanchéité soit formée entre l'élément de connexion dans l'extrémité de base de la tétine et l'élément complémentaire sur le réceptacle à lait, dans laquelle l'élément de connexion femelle dans l'extrémité de base de la tétine :
i. est un renfoncement de forme rectangulaire ; ou
ii. présente une forme substantiellement rectangulaire dans le plan d'extrémité de base ; ou
iii. présente une forme substantiellement elliptique dans le plan d'extrémité de base.

2. Tétine d'alimentation animale selon la revendication 1, dans laquelle l'élément de connexion femelle dans l'extrémité de base de la tétine présente deux lignes de symétrie.

3. Tétine d'alimentation animale selon la revendication 1 ou 2, dans laquelle au moins l'une des lignes de symétrie de l'élément de connexion dans l'extrémité de base est alignée avec, ou est perpendiculaire à, l'ouverture ou les ouvertures dans l'extrémité de mamelon de la tétine.

4. Tétine d'alimentation animale selon l'une quelconque des revendications 1 à 3, dans laquelle l'élément mâle complémentaire sur le réceptacle à lait présente la forme d'un embout (24).

5. Tétine d'alimentation animale selon la revendication 4, dans laquelle l'embout est un embout rectangulaire.

6. Tétine d'alimentation animale selon la revendication 4 ou 5, dans laquelle l'embout est un embout conique.

7. Tétine d'alimentation animale selon l'une quelconque des revendications 1 à 6, dans laquelle la tétine est configurée pour être fixée au réceptacle à lait à l'aide d'un système de fixation qui inclut l'utilisation d'un ou plusieurs éléments de retenue à enclenchement (21 et 22) configurés pour fixer la base de la tétine au réceptacle à lait.
